# EUROPEAN PATENT APPLICATION

(11) **EP 4 109 964 A1**
(43) Date of publication of application: **28.12.2022**
(21) Application number: 20921707.4
(22) Date of filing: 24.02.2020
(51) Int. Cl.: H04W 36/00

(54) **TRANSMISSION CONTROL METHOD, TERMINAL DEVICE AND NETWORK DEVICE**

(71) Applicant: GUANGDONG OPPO MOBILE TELECOMMUNICATIONS CORP., LTD., Dongguan, Guangdong 523860 (CN)
(72) Inventor: LI, Haitao, Dongguan, Guangdong 523860 (CN)
(74) Representative: Taor, Simon Edward William
(86) International application number: PCT/CN2020/076482
(87) International publication number: WO 2021/168627

(57) **Abstract**

The present disclosure provides a transmission control method, a terminal device, a network device, a chip, a computer-readable storage medium, a computer program product, and a computer program. The method includes: triggering, by a terminal device, a random access procedure when a predetermined condition is met. The predetermined condition includes at least one of: a Random Access Channel-less (RACH-less) handover failure, or a dynamically scheduled uplink transmission resource being unavailable.

## Description

### TECHNICAL FIELD

The present disclosure relates to communication technology, and more particularly, to a transmission control method, a terminal device, a network device, a chip, a computer-readable storage medium, a computer program product, and a computer program.

### BACKGROUND

In an NR terrestrial network, the propagation delay between a terminal device and a network device is relatively low. According to the delay information, in a Random Access Channel-less (RACH-less) HandOver (HO), a target cell can properly configure time domain positions of uplink resources in a handover command, for the terminal device to transmit a RRCReconfigurationComplete (Radio Resource Control Reconfiguration Complete) message (i.e., handover complete message) when accessing the target cell.

Compared with the cellular network used in the traditional NR, the propagation delay between a terminal device and a satellite in an NTN is relatively large, and the propagation delay of this part of the air interface for a UE to correctly receive the handover command varies significantly, which may cause the terminal device to miss the configured uplink resources in the process of accessing the target cell, resulting in a failure of handover access. Therefore, in the NTN scenario, how to ensure the success rate of handover access of the terminal device becomes a problem to be solved.

### SUMMARY

To solve the above technical problems, the embodiments of the present disclosure provide a transmission control method, a terminal device, a network device, a chip, a computer-readable storage medium, a computer program product, and a computer program.

In a first aspect, a transmission control method is provided. The method includes: triggering, by a terminal device, a random access procedure when a predetermined condition is met. The predetermined condition includes at least one of: a Random Access Channel-less (RACH-less) handover failure, or a dynamically scheduled uplink transmission resource being unavailable.

In a second aspect, a transmission control method is provided. The method includes: performing, by a network device, a random access procedure with a terminal device when the terminal device meets a predetermined condition. The predetermined condition includes at least one of: a Random Access Channel-less (RACH-less) handover failure, or a dynamically scheduled uplink transmission resource being unavailable.

In a third aspect, a terminal device is provided. The terminal device includes: a first communication unit configured to trigger a random access procedure when a predetermined condition is met. The predetermined condition includes at least one of: a Random Access Channel-less (RACH-less) handover failure, or a dynamically scheduled uplink transmission resource being unavailable.

In a fourth aspect, a network device is provided. The network device includes: a second communication unit configured to perform a random access procedure with a terminal device when the terminal device meets a predetermined condition. The predetermined condition includes at least one of: a Random Access Channel-less (RACH-less) handover failure, or a dynamically scheduled uplink transmission resource being unavailable.

In a fifth aspect, a terminal device is provided. The terminal device includes: a processor and a memory for storing a computer program executable on the processor. The memory is configured to store a computer program, and the processor is configured to invoke and execute the computer program stored in the memory to perform steps in the above method.

In a sixth aspect, a network device is provided. The network device includes a processor and a memory for storing a computer program executable on the processor. The memory is configured to store a computer program, and the processor is configured to invoke and execute the computer program stored in the memory to perform steps in the above method.

In a seventh aspect, a chip is provided. The chip includes a processor configured to invoke and execute a computer program from a memory, to enable a device provided with the chip to perform the above method.

In an eighth aspect, a computer-readable storage medium is provided. The computer-readable storage medium is configured to store a computer program that enables a computer to perform steps of the above method.

In a ninth aspect, a computer program product is provided. The computer program product includes computer program instructions that cause a computer to perform the above method.

In a tenth aspect, a computer program is provided. The computer program causes a computer to perform the above method.

With the solution according to the embodiments, when the predetermined condition is met, the random access procedure is directly triggered. The predetermined condition may include RACH-less handover failure or a dynamically scheduled uplink transmission resource being unavailable. In this way, when the network device cannot be accessed based on the configured uplink resource, the target network device can be directly accessed by means of random access, thereby improving the success rate of access.

### BRIEF DESCRIPTION OF DRAWINGS

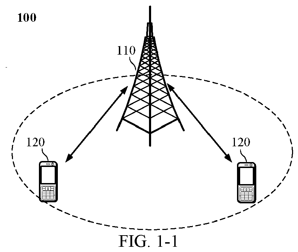

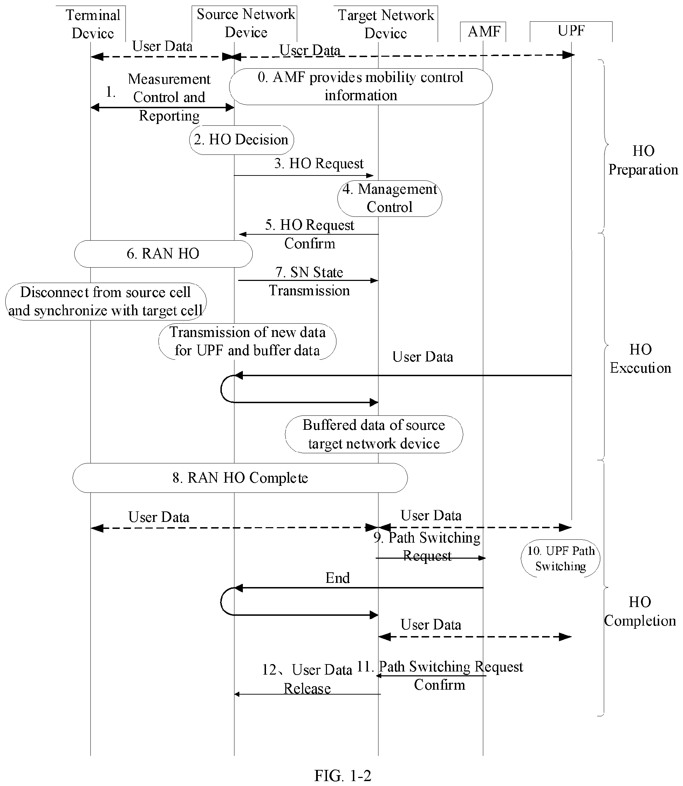

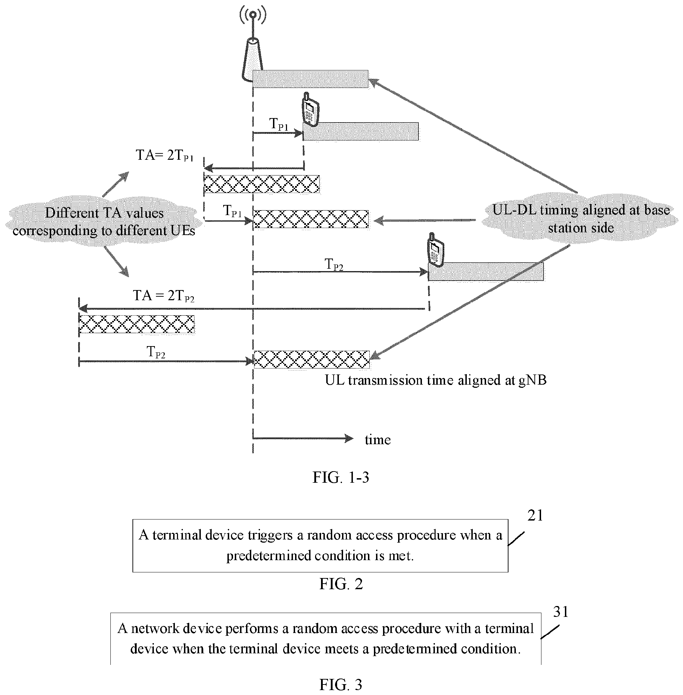

FIG. 1-1 is a first schematic diagram showing a communication system architecture provided by an embodiment of the present disclosure;
FIG. 1-2 is a schematic diagram showing a handover process;
FIG. 1-3 is a schematic diagram showing a comparison of processing scenarios using TA;
FIG. 2 is a first schematic flowchart illustrating a transmission control method according to an embodiment of the present disclosure;
FIG. 3 is a second schematic flowchart illustrating a transmission control method according to an embodiment of the present disclosure;
FIG. 4 is a third schematic flowchart schematic flowchart illustrating a transmission control method according to an embodiment of the present disclosure;
FIG. 5 is a fourth schematic flowchart illustrating a transmission control method according to an embodiment of the present disclosure;
FIG. 6 is a fifth schematic flowchart illustrating a transmission control method according to an embodiment of the present disclosure;
FIG. 7 is a schematic diagram showing a structure of a terminal device according to an embodiment of the present disclosure;
FIG. 8 is a schematic diagram showing a structure of a network device according to an embodiment of the present disclosure;
FIG. 9 is a schematic diagram showing a structure of a communication device according to an embodiment of the present disclosure;
FIG. 10 is a schematic block diagram of a chip according to an embodiment of the present disclosure; and
FIG. 11 is a second schematic diagram showing a communication system architecture according to an embodiment of the present disclosure.

### DESCRIPTION OF EMBODIMENTS

In order to facilitate a more thorough understanding of the features and technical content of the embodiments of the present disclosure, the implementation of the embodiments of the present disclosure will be described in detail below with reference to the figures. The figures are for reference only and are not intended to limit the embodiments of the present disclosure.

The technical solutions in the embodiments of the present disclosure will be described below with reference to the figure in the embodiments of the present disclosure. Obviously, the described embodiments are only some embodiments, rather than all embodiments, of the present disclosure. All other embodiments obtained by those skilled in the art based on the embodiments in the present disclosure without inventive efforts are to be encompassed by the scope of the present disclosure.

The technical solutions according to the embodiments of the present disclosure can be applied to various communication systems, including for example: Global System of Mobile Communication (GSM), Code Division Multiple Access (CDMA) system, Wideband Code Division Multiple Access (WCDMA) system, General Packet Radio Service (GPRS), Long Term Evolution (LTE) system, LTE Frequency Division Duplex (FDD) system, LTE Time Division Duplex (TDD) system, Universal Mobile Telecommunication System (UMTS), Worldwide Interoperability for Microwave Access (WiMAX) communication system, or the 5^{th} Generation (5G) communication system.

A communication system 100 in which an embodiment of the present disclosure can be applied is shown in FIG. 1. The communication system 100 may include a network device 110. The network device 110 may be a device that can communicate with a terminal device (or referred to as communication terminal or terminal) 120. The network device 110 may provide communication coverage for a particular geographic area, and may communicate with terminal devices located in the coverage area. Optionally, the network device 110 may be a base station such as Base Transceiver Station (BTS) in a GSM system or a CDMA system, a base station such as NodeB (NB) in a WCDMA system, a base station such as Evolutional Node (eNB or eNodeB) in an LTE system, or a radio controller in a Cloud Radio Access Network (CRAN). Alternatively, the network device 110 may be a mobile switch center, a relay station, an access point, a vehicle-mounted device, a wearable device, a hub, a switch, a network bridge, a router, a network side device in a 5G network, or a network device in a future evolved Public Land Mobile Network (PLMN).

The communication system 100 further includes at least one UE 120 located within the coverage of the network device 110. As used herein, the term "UE" may include, but not limited to, an apparatus connected via a wired line, e.g., via a Public Switched Telephone Network (PSTN), a Digital Subscriber Line (DSL), a digital cable, or a direct cable connection, and/or via another data connection/network, and/or via a wireless interface, e.g., for a cellular network, a Wireless Local Area Network (WLAN), a digital TV network such as a DVB-H network, a satellite network, an AM-FM broadcast transmitter, and/or another UE, and configured to receive/transmit communication signals, and/or an Internet of Things (IoT) device. A UE configured to communicate via a wireless interface may be referred to as a "wireless communication terminal device", a "wireless terminal device", or a "mobile terminal device".

Optionally, direct communication, such as Device to Device (D2D) communication, may be performed between the UEs 120.

The handover processing flow is explained as follows. When a terminal device using a network service moves from one cell to another, or due to wireless transmission traffic load adjustment, activation operation and maintenance, equipment failure, etc., in order to ensure the continuity of communication and the quality of service, the system needs to transfer the communication link between the terminal device and the original cell to the new cell, that is, perform the handover process. Taking a handover process over the Xn interface as an example, the entire handover process is divided into the following three stages, as shown in FIG. 1-2.

Handover preparation stage: As shown at 0 to 5 in the figure, a target network device and a source network device operate according to mobility control information provided by an Access and Mobility Management Function (AMF). A terminal device performs measurement control and reporting, and the source network device makes a handover decision and then the source network device performs handover request, management control, and handover request confirmation with the target network device. The handover confirmation message includes the handover command generated by the target cell, and the source network device is not allowed to modify the handover command generated by the target network device, and directly forwards the handover command to the terminal device.

Handover execution stage: As shown at 6 to 7 in the figure, the terminal device executes the handover process immediately after receiving the handover command, which may include: Radio Access Network (RAN) handover between the terminal device and the source network device, the terminal device disconnecting from the source cell and synchronizing establishing a connection with the target cell and (such as performing random access, transmitting an RRC handover complete message to the target base station, etc.), SN state transition, as well as the source network device transmitting new data from a User Plane Function (UPF) entity and transmitting buffered data to the target network device.

Handover completion stage: As shown at 8 to 12 in the figure, after the RAN handover is completed, the terminal device transmits user data via the target network device, and the user data is transmitted between the target network device and the UPF. Then the target network device transmits a path switching request with the AMF, the UPF performs the path switching, and then the AMF notifies the target network device of the path switching completion via the source network device. The AMF transmits a path switching request acknowledgement to the target network device, and then the target network device notifies the source network device to release the user data.

Unlike the handover process shown above, RACH-less HO for certain scenarios (for example, when the target cell can determine that the TA of the UE to the source cell is the same as the TA of the UE to the target cell, or the TA of the UE to the target cell is 0) may specifically include the following steps. The target cell (target network device) may configure RACH-skip information, i.e., indicating that the handover process may be RACH-less HO, in a handover command transmitted to the terminal device via the source network device. The RACH-skip information may include uplink resources for the terminal device to access the target cell, for the UE to transmit a handover complete message. If no uplink resource is configured in the handover command, the terminal device needs to monitor the PDCCH of the target cell, wait for the target cell to schedule uplink transmission, and use the scheduled uplink resource to transmit the handover complete message.

Further, in the NR terrestrial network, the propagation delay between the terminal device and the network is relatively low, and the delay required for the target cell to correctly transmit the handover command, which is forwarded by the source cell, to the UE (i.e., including the X2 delay, plus the time delay from the source cell receiving the handover command to forwarding the handover command, plus the propagation delay over the Uu air interface of the source cell) is not high. According to this delay information, the target cell can properly configure the time domain positions of the uplink resources in the handover command in the RACH-less HO, such that the terminal device can transmit the RRCReconfigurationComplete message (i.e., handover complete message) when accessing the target cell.

Compared with the cellular network used in the traditional NR, the propagation delay between the terminal device and the satellite in the NTN is relatively large. For the above delay of the handover command from the target cell to the terminal device, the source cell may experience RLC retransmissions or HARQ retransmissions in forwarding the handover command, such that the propagation delay of this part of the air interface for the terminal device to correctly receive the handover command varies significantly. This brings a great challenge for the target cell to set the time domain positions of the uplink resources in the RACH-less handover command. If the terminal device receives the handover command correctly after multiple RLC retransmissions or multiple HARQ retransmissions on the source cell side, it is possible that the terminal device has missed the configured uplink resources when accessing the target cell, resulting in the failure of the handover access.

In addition, for an LEO scenario, due to the high-speed movement of the satellite, the TA from the terminal device to the satellite base station changes rapidly. In a handover scenario, since the terminal device never communicates with the target cell before the handover is performed, the target cell may not be able to accurately know the TA value of the terminal device. If the TA determined by the target cell is smaller than the real TA value of the UE, there is a possibility that the K value indicated in the DCI may be smaller than the real TA value of the UE when the target base station schedules the uplink transmission resource for the terminal device via PDCCH. This will cause the UE to be unable to use the uplink resource when it receives the PDCCH, because the uplink resource (time n+K, corresponding to the uplink UE timing) scheduled by the PDCCH (time n, corresponding to the downlink UE timing) occurs before the actual PDCCH reception time. As a result, such resource has been missed by the UE and thus cannot be used, resulting in the access failure.

In addition, related technologies for the above TA may include the following. An important feature of uplink transmission is that different UEs have orthogonal multiple access in time and frequency, i.e., uplink transmissions from different UEs in the same cell do not interfere with each other. In order to ensure the orthogonality of uplink transmissions and avoid intra-cell interference, the gNB requires that the time at which signals from different UEs with different frequency domain resources at the same time arrive at the gNB are substantially aligned. In order to ensure time synchronization on the gNB side, the NR supports a mechanism of uplink timing advance. The uplink clock and the downlink clock on the gNB side are the same, but there is an offset between the uplink clock and the downlink clock on the UE side, and different UEs have their own uplink timing advances (as shown in FIG. 1 to FIG. 3). By appropriately controlling the offset of each UE, the gNB can control the time at which the uplink signals from different UEs arrive at the gNB. For a UE farther from the gNB, due to higher transmission delay, it needs to transmit uplink data earlier than a UE closer to the gNB.

It is to be noted that the terms "system" and "network" are often used interchangeably herein. The term "and/or" as used herein only represents a relationship between correlated objects, including three relationships. For example, "A and/or B" may mean A only, B only, or both A and B. In addition, the symbol "/" as used herein represents an "or" relationship between the correlated objects preceding and succeeding the symbol.

In order to facilitate a more thorough understanding of the features and technical content of the embodiments of the present disclosure, the implementation of the embodiments of the present disclosure will be described in detail below with reference to the figures. The figures are for reference only and are not intended to limit the embodiments of the present disclosure.

An embodiment of the present disclosure provides a transmission control method, as shown in FIG. 2. The method includes the following step.

At step 21, a terminal device triggers a random access procedure when a predetermined condition is met.

Here, the predetermined condition includes at least one of: a Random Access Channel-less (RACH-less) handover failure, or a dynamically scheduled uplink transmission resource being unavailable.

In a process of triggering a random access procedure by a terminal device, an embodiment further provides a transmission control method, as shown in FIG. 3. The method includes the following step.

At step 31, a network device performs a random access procedure with a terminal device when the terminal device meets a predetermined condition.

Here, the predetermined condition includes at least one of: a Random Access Channel-less (RACH-less) handover failure, or a dynamically scheduled uplink transmission resource being unavailable.

The embodiments of the present disclosure can be applied to a Non Terrestrial Network (NTN). Here, the NTN provides communication services to terrestrial users by means of satellite communication. Compared with terrestrial cellular network communication, the satellite communication has many unique advantages. First of all, satellite communication is not limited by the user's geographical area. For example, typical terrestrial communication cannot cover areas such as oceans, mountains, deserts, etc., where communication infrastructure cannot be set up or communication coverage cannot be provided due to sparse population. For satellite communication, since a single satellite can cover a large ground area, and satellites can orbit around the earth, theoretically every corner of the earth can be covered by satellite communication. Secondly, satellite communication has a significant social value. Satellite communication can provide coverage at low cost in remote mountainous areas and poor and undeveloped countries or regions, such that people in these regions can enjoy advanced voice communication and mobile internet technologies, which is conducive to narrowing a digital divide between these regions and developed regions and promoting development in these regions. Thirdly, the satellite communication has a long range, and the communication cost does not increase significantly when the communication range increases. Finally, the satellite communication has high stability and is not limited by natural disasters.

According to different orbital altitudes, communication satellites are divided into Low-Earth Orbit (LEO) satellites, Medium-Earth Orbit (MEO) satellites, Geostationary Earth Orbit (GEO) satellites, High Elliptical Orbit (HEO) satellites, etc.

LEO satellites have an altitude range of 500km to 1500km, and the corresponding orbital period is about 1.5 hours to 2 hours. The signal propagation delay of single-hop communication between users is generally lower than 20ms. The maximum satellite visible time is 20 minutes. The signal propagation distance is short, the link loss is low, and the transmit power requirements of user terminals are not high.

GEO satellites have an orbit altitude of 35786km and revolve around the earth at a period of 24 hours. The signal propagation delay of single-hop communication between users is generally 250ms.

In order to ensure the satellite coverage and improve the system capacity of the entire satellite communication system, satellites use multiple beams to cover the ground area. A satellite can form dozens or even hundreds of beams to cover the ground area. A satellite beam can cover a ground area having a diameter of tens to hundreds of kilometers.

The terminal device in the embodiment can be a terminal device capable of communicating in an NTN scenario, and the network device can be a satellite.

Based on the above scenario, the transmission control methods according to the present disclosure will be described with reference to the following examples.

### Example 1

In the process of the RACH-less handover in this example, the handover command received by the terminal device may include configured RACH-skip information and/or one or more RACH parameters. In the process, the terminal device does not monitor PDCCH. If there is an available first uplink resource in the uplink resource configured in the handover command, a handover complete message can be transmitted on the first uplink transmission resource. If there is no available uplink resource in the uplink resource configured in the handover command, the UE can trigger a random access procedure for access based on the RACH parameter(s) configured in the handover command.

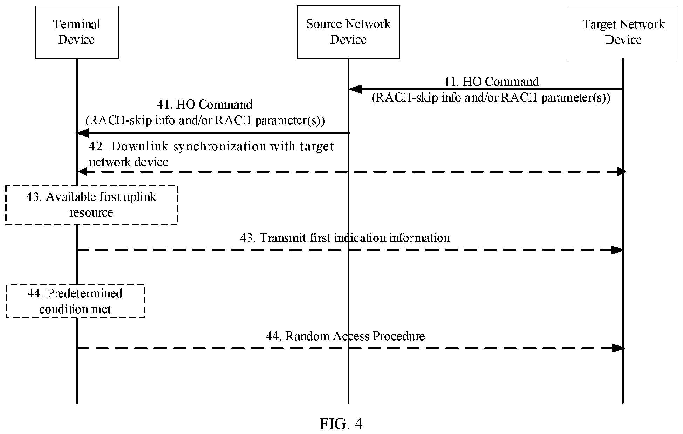

The specific implementation process of this example, as shown in FIG. 4, includes the following steps.

At step 41, the terminal device receives a handover command.

Here, the terminal device may receive the handover command transmitted by the network device; that is, the network device transmits the handover command to the terminal device.

The network device may be a source network device, and its process may include: the source network device receiving the handover command transmitted by a target network device, and forwarding the handover command to the terminal device.

The network device may be a target network device, and the process may include: the target network device transmitting the handover command to the terminal device via the source network device. That is, the handover command is generated by the target cell and forwarded by the source cell.

Here, the handover command is used to configure RACH Skip information and/or one or more RACH parameters.

The RACH Skip information indicates an uplink resource for accessing a target network device.

The one or more RACH parameters include: a RACH resource and/or a dedicated preamble sequence.

Here, the uplink resource indicated in the RACH Skip information may be understood as the resource configured by the network device for the terminal device. The RACH resource may include a time-frequency resource.

It is to be noted that the handover command may include the RACH-Skip information, the one or more RACH parameters, or both.

Since in the solution provided in this example, it is necessary to initiate random access based on the RACH parameter(s) when there is no available uplink resource in the uplink resource for accessing the target network device as indicated in the RACH-Skip information, in a preferred example, the handover command may include at least the RACH parameter(s).

At step 42, the terminal device receives the handover command and performs downlink synchronization with the target network device. That is, after receiving the handover command, the terminal device performs downlink synchronization with the target cell. The process of downlink synchronization with the target network device in this step has been described above in connection with FIG. 1-2, and details thereof will be omitted here.

After completing the process of the above steps 41 to 42, the terminal device may further determine to trigger the random access procedure based on the predetermined condition.

In this example, the predetermined condition may be a RACH-less handover failure.

Specifically, the predetermined condition of the RACH-less handover failure may include at least one of: the uplink resource for accessing the target network device indicated by the RACH Skip information being unavailable, and the RACH Skip information not being included in the handover command.

That is, in this example, it is first determined whether the predetermined condition is met. If not, the process proceeds with the step 43, or otherwise the process proceeds with the step 44.

In the process of determining whether the predetermined condition is met, it can be determined whether the uplink resource for accessing the target network device as indicated in the RACH Skip information (carried in the handover command) is unavailable. If it is unavailable, the predetermined condition is met; or otherwise the predetermined condition is not met.

Alternatively, in the process of determining whether the predetermined condition is met, it can be determined whether the handover command includes the RACH Skip information. If not, the predetermined condition is met; or otherwise the predetermined condition is not met.

Alternatively, the above two conditions can be used in combination. For example, in the process of determining whether the predetermined conditions are met, it can be determined first whether the handover command includes the RACH Skip information. If not, the predetermined condition is met.

If the handover command includes the RACH Skip information, it is further determined whether the uplink resource for accessing the target network device as indicated in the RACH Skip information (carried in the handover command) is unavailable. If so, the predetermined condition is met; or otherwise the predetermined condition is not met.

Further description will be given with reference to step 43 and step 44.

At step 43, when there is an available first uplink resource in the uplink resource for accessing the target network device as included in the RACH Skip information, the terminal device transmits first indication information on the first uplink resource. The first indication information indicates handover completion. Correspondingly, the target network device receives the first indication information transmitted by the terminal device.

The first indication information may specifically be a Radio Resource Control (RRC) Reconfiguration Complete message.

This step can be understood as transmitting the first indication information on the available first uplink resource in the uplink resource for accessing the target network device as included in the RACH Skip information, when the predetermined condition is not met.

That is, if there is an available uplink resource in one or more uplink resources configured in the handover command (in the RACH-Skip information in the handover command), the uplink resource can be used as the first uplink resource, and the terminal device can use the first uplink resource to transmit the first indication information, i.e., the RRCReconfigurationComplete message. Correspondingly, the target network device may receive the first indication information, and after receiving the first indication information, the target network device may determine that the handover of the terminal device has been completed and the subsequent processing with the terminal device can be performed, details of which will be omitted here.

Furthermore, when there are available K uplink resources in the L uplink resources configured in the handover command (in the RACH-Skip information in the handover command), the first one of the K uplink resources can be selected as the first uplink resource. Alternatively, one of the K uplink resources may be randomly selected as the first uplink resource. Alternatively, one of the K uplink resources having the highest transmission quality may be selected as the first uplink resource. Here, both L and K are integers, and L is greater than or equal to K.

The above available uplink resource can be understood as having a time domain position as configured by the network device at least later than the current time.

Alternatively, the uplink resource in one or more uplink resources configured in the RACH-Skip information in the handover command may be unavailable for any of the following reason. The handover command is propagated via an X2 interface, buffered as the source base station, transmitted by the source cell over an air interface, and so on, such that the delay in transmission of the command is too high that the terminal device may miss the configured uplink resource (the position of the time domain resource).

At step 44, when the predetermined condition is met, the terminal device triggers the random access procedure based on the one or more RACH parameters in the handover command.

That is, if the predetermined condition is met, the terminal device does not monitor Physical Downlink Control Channel (PDCCH), but directly uses the RACH parameter(s) configured in the handover command for the random access procedure.

In addition, in this step, after the terminal device triggers the random access procedure based on the RACH parameter(s) in the handover command, it may further include transmitting the first indication information (i.e., RRCReconfigurationComplete) to the target network device when the random access succeeds) to indicate that the handover has been completed.

In this example, the predetermined condition may be specifically the uplink resource for accessing the target network device indicated by the RACH Skip information being unavailable, or the RACH Skip information not being included in the handover command. Correspondingly, this step may specifically include:
if there is no available uplink resource configured in the handover command, the terminal device using the RACH parameter(s) configured in the handover command to trigger the random access procedure, and transmitting the first indication information, i.e., the RRCReconfigurationComplete message, after the random access succeeds; or
if no uplink resource is configured in the handover command, the terminal device using the RACH parameter(s) configured in the handover command to trigger the random access procedure, and transmitting the first indication information, i.e., the RRCReconfigurationComplete message, after the random access succeeds.

With the solution provided in this example, for the existing RACH-less handover, the additional RACH parameter configuration is introduced to configure the RACH resource. When there is no available uplink resource (e.g., when the configured uplink resource is missed since the time delay is too high for the handover command to be propagated via the X2 interface, buffered as the source base station, and transmitted by the source cell over the air interface), an uplink resource can still be obtained via the random access procedure to access the target cell, which improves the success rate of the handover access.

### Example 2

Its difference from the above example is that, in addition to configuring the RACH-skip information and the RACH parameter(s) in the handover command, a first timer (also referred to as RACH-less timer) is also configured in the handover command to control maximum allowable time for RACH-less access attempts. After receiving the handover command, the terminal device starts the first timer (also referred to as RACH-less timer). The terminal device monitors the PDCCH. If the RACH-less access succeeds, the first timer (RACH-less timer) is stopped. If the first timer (RACH-less timer) expires, it means that the RACH-less access fails, and the terminal device uses the RACH parameter(s) configured in the handover command to trigger the random access procedure for access.

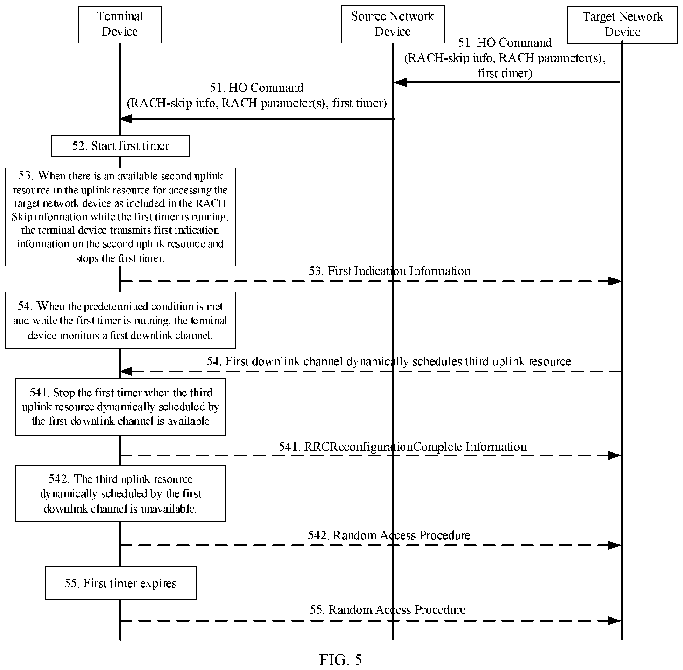

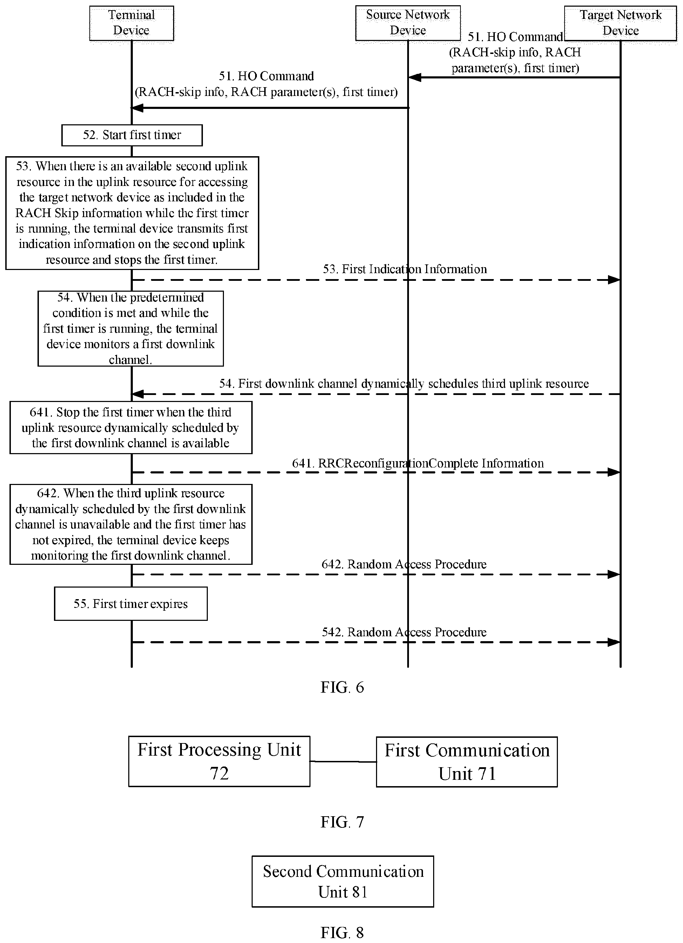

The specific implementation process of this example, as shown in FIGS. 5 and 6, includes the following steps.

The step 51 is the same as the above step 41, with the difference that, in addition to the content included in Example 1, the handover command in this example may further include a first timer. The first timer may be referred to as an RACH-less timer, which is used to limit the maximum time for RACH-less access (or the maximum allowable time for RACH-less access attempts.

At step 52, the terminal device starts the first timer in response to receiving the handover command. Specifically, after receiving the handover command, the terminal device performs downlink synchronization with the target cell and starts the first timer (RACH-less timer).

It is to be noted that, the time at which the first timer is started is the time at which the terminal device receives the handover command.

After performing the step 52, the terminal device may start to make the following determination(s): determining whether the first timer has expired and/or determining whether the predetermined condition is met. If the first timer has not expired and the predetermined condition is met, the terminal device monitors a first downlink channel, and determines whether to perform the random access procedure based on the monitoring result. When the first timer expires, the terminal device directly performs the random access procedure based on the RACH parameter(s) in the handover command.

In the following, a detailed description regarding how to perform subsequent processing based on the first timer and/or the predetermined condition will be given with reference to steps 53 to 55.

At step 53, when there is an available second uplink resource in the uplink resource for accessing the target network device as included in the RACH Skip information while the first timer is running, the terminal device transmits first indication information on the second uplink resource and stops the first timer. The first indication information indicates handover completion. The process ends here.

Specifically, while the first timer is running (or when the first timer has not expired), it is determined whether the predetermined condition is met. If not, i.e., if the handover command includes the RACH Skip information and there is an available second uplink resource in the uplink resource for accessing the target network device as included in the RACH Skip information, the terminal device transmits the first indication information on the second uplink resource, indicating handover completion, and stops the first timer. Then, the RACH-less handover is completed.

The definition and method for determining the available uplink resource are the same as those described in Example 1, and details thereof will be omitted here. The content of the first indication information is also the same as that described in the above Example 1, and details thereof will be omitted here.

In addition, the second uplink resource in this example and the first uplink resource in Example 1 may be same or different, and the present disclosure is not limited to any of these examples.

The above steps 51 to 53 are the same in FIG. 5 and FIG. 6, and details thereof will be omitted here.

At step 54, when the predetermined condition is met and while the first timer is running, the terminal device monitors a first downlink channel that is used to dynamically schedule a third uplink resource.

Specifically, while the first timer is running (or when the first timer has not expired), it is determined whether the predetermined condition is met. If the predetermined condition is met, i.e., if the handover command does not include the RACH Skip information or if there is no available uplink resource in the uplink resources for accessing the target network device as included in the RACH Skip information in the handover command, the terminal device monitors the first downlink channel.

Correspondingly, the target network device may further indicate the dynamically scheduled uplink resource to the terminal device via the first downlink channel. In this example, the dynamically scheduled uplink resource may be the third uplink resource.

Here, the first downlink channel may be PDCCH. Further, it may be a PDCCH for dynamically scheduling the third uplink resource, which may be a PDCCH scrambled based on a C-RNTI.

For example, while the RACH-less timer is running, if there is no available uplink resource configured in the handover command or no uplink resource is configured in the handover command, the terminal device monitors the PDCCH (or referred to as Downlink Control Information (DCI)) scrambled with the C-RNTI. If the PDCCH dynamically scheduling the uplink transmission is detected, based on whether the third uplink resource dynamically scheduled by the PDCCH, i.e., by the first downlink channel, is available, there may be the following cases.

Case 1, where the third uplink resource is available:
That is, at step 541 in FIG. 5 and step 641 in FIG. 6: if the third uplink resource dynamically scheduled by the first downlink channel is available while the first timer is running, the terminal device transmits RRCReconfigurationComplete information on the third uplink resource and stops the first timer.

For example, if the uplink resource scheduled by the PDCCH is available, the terminal device transmits the RRCReconfigurationComplete message using the dynamically scheduled uplink resource. Further, the terminal device stops the RACH-less timer at the same time.

Case 2, where the third uplink resource is unavailable:
Processing Mode 1: at step 542 in FIG. 5, if the third uplink resource dynamically scheduled by the first downlink channel is unavailable, the terminal device triggers the random access procedure based on the RACH parameter(s) carried in the handover command.

The reason for which the third uplink resource scheduled by the first downlink channel (PDCCH) is unavailable may be that the indicated K2 value is smaller than the current TA value of the terminal device.

Further, when the terminal device triggers the random access procedure based on the one or more RACH parameters carried in the handover command, the method may further include: stopping the first timer.

That is, when the terminal device initiates the random access procedure, it stops the first timer (RACH-less timer), and then performs the access processing procedure.

Processing Mode 2, at step 642 in FIG. 6, if the third uplink resource dynamically scheduled by the first downlink channel is unavailable and the first timer has not expired, the terminal device keeps monitoring the first downlink channel.

In this processing mode, if the third uplink resource dynamically scheduled by the first downlink channel received this time is unavailable, it is needed to keep monitoring the first downlink channel, i.e., the PDCCH. If while the first timer is running the third uplink resource dynamically scheduled by the first downlink channel is available, the terminal device transmits RRCReconfigurationComplete information on the third uplink resource, and stops the first timer.

In addition, if the first timer expires and the first downlink channel scheduling the available third uplink resource is not received, step 55 may be further performed.

At step 55, the terminal device triggers a random access procedure based on the one or more RACH parameters in the handover command in response to expiry of the first timer.

Specifically, if the predetermined condition is still met when the first timer expires, and the third uplink resource dynamically scheduled based on the first downlink channel is unavailable, then the random access procedure can be directly triggered based on the RACH parameter(s) configured in the handover command at this time.

The processes of the step 55 are the same in FIG. 5 and FIG. 6, and details thereof will be omitted here.

In this example, for RACH-less handover, the RACH-less timer is introduced to effectively control the time for the RACH-less access. If the RACH-less access fails, the random access procedure can still be triggered to complete the access, thereby improving the handover success rate. For the PDCCH monitoring, by determining whether the uplink resource scheduled by the PDCCH is available or not, it is determined whether to update the TA value on the network side by triggering the random access procedure as soon as possible, which can enable the network to schedule the available uplink resource more quickly and improve the access success rate.

### Example 3

Unlike the above Examples 1 and 2, this example is not limited to the process of RACH-less handover. The terminal device's operation of triggering the RACH when the uplink transmission resource is unavailable can also be applied when the terminal device receives dynamic scheduling of the uplink transmission from the base station during normal data transmission.

The predetermined condition in this example is different from the above Examples 1 and 2. The predetermined condition in this example may be the dynamically scheduled uplink transmission resource being unavailable.

Specifically, the terminal device receives a fourth uplink resource dynamically scheduled by the first downlink channel.

Correspondingly, the terminal device triggering the random access procedure when the predetermined condition is met may include: triggering, by the terminal device, the random access procedure when the fourth uplink resource dynamically scheduled by the first downlink channel is unavailable.

Correspondingly, the network device may further indicate the dynamically scheduled uplink resource to the terminal device via the first downlink channel. In this example, the dynamically scheduled uplink resource may be the fourth uplink resource

The description of the first downlink channel is the same as the previous example, and details thereof will be omitted here. The scheme for determining whether the uplink resource scheduled by the first downlink channel is available is the same as that in Example 2, and details thereof will be omitted here. It is to be noted that the fourth uplink resource and the third uplink resource in the above example may be the same or different, and the present disclosure is not limited to any of these examples.

In addition, the terminal device in this example triggering the random access procedure may include performing the random access procedure based on the RACH parameter(s).

The scheme for obtaining the RACH parameter(s) may include: the RACH parameter(s) being configured by the network device via downlink information, or being predetermined (for example, predetermined according to a protocol), and so on. If the RACH parameter(s) is (are) configured by the network device via downlink information, it (they) may be configured via DCI, RRC signaling, MAC CE, etc., and the list here is not exhaustive.

Of course, there is no conflict between the solution of Example 3 and the solutions of the above Example 1 or Example 2. Example 3 and Example 1 or Example 2 can be used in combination, but can be used in different processing stages of the terminal device. For example, the terminal device can use the solution provided in Example 1 or Example 2 in the RACH-less handover stage, and the solution provided in Example 3 in a processes other than the RACH-less handover process.

It can be seen that, with the above solutions, when the predetermined condition is met, the random access procedure is directly triggered. The predetermined condition may include RACH-less handover failure or a dynamically scheduled uplink transmission resource being unavailable. In this way, when the network device cannot be accessed based on the configured uplink resource, the target network device can be directly accessed by means of random access, thereby improving the success rate of access.

An embodiment of the present disclosure provides a terminal device, as shown in FIG. 7. The terminal device includes a first communication unit 71 configured to trigger a random access procedure when a predetermined condition is met.

Here, the predetermined condition includes at least one of: a Random Access Channel-less (RACH-less) handover failure, or a dynamically scheduled uplink transmission resource being unavailable.

In a process of triggering a random access procedure by a terminal device, an embodiment further provides a network device, as shown in FIG. 8. The network device includes a second communication unit 81 configured to perform a random access procedure with a terminal device when the terminal device meets a predetermined condition.

Here, the predetermined condition includes at least one of: a Random Access Channel-less (RACH-less) handover failure, or a dynamically scheduled uplink transmission resource being unavailable.

The embodiments of the present disclosure can be applied to a Non Terrestrial Network (NTN). The terminal device in the embodiment can be a terminal device capable of communicating in an NTN scenario, and the network device can be a satellite.

Based on the above scenario, the transmission control methods according to the present disclosure will be described with reference to the following examples.

### Example 1

In the process of the RACH-less handover in this example, the handover command received by the first communication unit 71 of the terminal device may include configured RACH-skip information and/or one or more RACH parameters. In the process, the first communication unit 71 of the terminal device does not monitor PDCCH. If there is an available first uplink resource in the uplink resource configured in the handover command, a handover complete message can be transmitted on the first uplink transmission resource. If there is no available uplink resource in the uplink resource configured in the handover command, the first communication unit 71 can trigger a random access procedure for access based on the RACH parameter(s) configured in the handover command.

Specifically, the first communication unit 71 of the terminal device receives a handover command.

Here, the terminal device may receive the handover command transmitted by the network device; that is, the second communication unit 81 of the network device transmits the handover command to the terminal device.

The network device may be a source network device, and its process may include: the second communication unit 81 of the source network device receiving the handover command transmitted by a target network device, and forwarding the handover command to the terminal device.

The network device may be a target network device, and the process may include: the target network device transmitting the handover command to the terminal device via the source network device. That is, the handover command is generated by the target cell and forwarded by the source cell.

Here, the handover command is used to configure RACH Skip information and/or one or more RACH parameters.

The RACH Skip information indicates an uplink resource for accessing a target network device.

The one or more RACH parameters include: a RACH resource and/or a dedicated preamble sequence.

Here, the uplink resource indicated in the RACH Skip information may be understood as the resource configured by the network device for the terminal device. The RACH resource may include a time-frequency resource.

It is to be noted that the handover command may include the RACH-Skip information, the one or more RACH parameters, or both.

The first communication unit 71 of the terminal device receives the handover command and performs downlink synchronization with the target network device. The terminal device may further include a first processing unit 72 configured to determine to trigger the random access procedure based on the predetermined condition.

In this example, the predetermined condition may be a RACH-less handover failure.

Specifically, the predetermined condition of the RACH-less handover failure may include at least one of: the uplink resource for accessing the target network device indicated by the RACH Skip information being unavailable, and the RACH Skip information not being included in the handover command.

In the process of determining whether the predetermined condition is met, the first processing unit 72 can determine whether the uplink resource for accessing the target network device as indicated in the RACH Skip information (carried in the handover command) is unavailable. If it is unavailable, the predetermined condition is met; or otherwise the predetermined condition is not met.

Alternatively, in the process of determining whether the predetermined condition is met, it can be determined whether the handover command includes the RACH Skip information. If not, the predetermined condition is met; or otherwise the predetermined condition is not met.

Alternatively, the above two conditions can be used in combination. For example, in the process of determining whether the predetermined conditions are met, it can be determined first whether the handover command includes the RACH Skip information. If not, the predetermined condition is met.

If the handover command includes the RACH Skip information, it is further determined whether the uplink resource for accessing the target network device as indicated in the RACH Skip information (carried in the handover command) is unavailable. If so, the predetermined condition is met; or otherwise the predetermined condition is not met.

When there is an available first uplink resource in the uplink resource for accessing the target network device as included in the RACH Skip information, the first communication unit 71 of the terminal device transmits first indication information on the first uplink resource. The first indication information indicates handover completion. Correspondingly, the second communication unit 81 of the target network device receives the first indication information transmitted by the terminal device.

The first indication information may specifically be a Radio Resource Control (RRC) Reconfiguration Complete message.

When the predetermined condition is met, the first communication unit 71 of the terminal device triggers the random access procedure based on the one or more RACH parameters in the handover command.

With the solution provided in this example, for the existing RACH-less handover, the additional RACH parameter configuration is introduced to configure the RACH resource. When there is no available uplink resource (e.g., when the configured uplink resource is missed since the time delay is too high for the handover command to be propagated via the X2 interface, buffered as the source base station, and transmitted by the source cell over the air interface), an uplink resource can still be obtained via the random access procedure to access the target cell, which improves the success rate of the handover access.

### Example 2

Its difference from the above example is that, in addition to configuring the RACH-skip information and the RACH parameter(s) in the handover command, a first timer (also referred to as RACH-less timer) is also configured in the handover command to control maximum allowable time for RACH-less access attempts. After receiving the handover command, the first communication unit 71 of the terminal device starts the first timer (also referred to as RACH-less timer). The first communication unit 71 of the terminal device monitors the PDCCH. If the RACH-less access succeeds, the first timer (RACH-less timer) is stopped. If the first timer (RACH-less timer) expires, it means that the RACH-less access fails, and the first communication unit 71 of the terminal device uses the RACH parameter(s) configured in the handover command to trigger the random access procedure for access.

The difference from Example 1 lies in that, in addition to the content included in Example 1, the handover command in this example may further include a first timer. The first timer may be referred to as RACH-less timer, which is used to limit the maximum time for RACH-less access or the maximum allowable time for RACH-less access attempts.

The first processing unit 72 of the terminal device starts the first timer in response to the first communication unit 71 receiving the handover command. Specifically, after receiving the handover command, the terminal device performs downlink synchronization with the target cell and starts the first timer (RACH-less timer).

When there is an available second uplink resource in the uplink resource for accessing the target network device as included in the RACH Skip information while the first timer is running, the first communication unit 71 of the terminal device transmits first indication information on the second uplink resource and the first processing unit 72 stops the first timer. The first indication information indicates handover completion. The process ends here.

When the predetermined condition is met and while the first timer is running, the first communication unit 71 of the terminal device monitors a first downlink channel that is used to dynamically schedule a third uplink resource.

The second communication unit 81 of the network device may further indicate the dynamically scheduled uplink resource to the terminal device via the first downlink channel. In this example, the dynamically scheduled uplink resource may be the third uplink resource.

For example, while the RACH-less timer is running, if there is no available uplink resource configured in the handover command or no uplink resource is configured in the handover command, the terminal device monitors the PDCCH (or referred to as Downlink Control Information (DCI)) scrambled with the C-RNTI. If the PDCCH dynamically scheduling the uplink transmission is detected, based on whether the third uplink resource dynamically scheduled by the PDCCH, i.e., by the first downlink channel, is available, there may be the following cases.

Case 1, where the third uplink resource is available:
That is, if the third uplink resource dynamically scheduled by the first downlink channel is available while the first timer is running, the first communication unit 71 of the terminal device transmits RRCReconfigurationComplete information on third uplink resource and stops the first timer.

Case 2, where the third uplink resource is unavailable:
Processing Mode 1: if the third uplink resource dynamically scheduled by the first downlink channel is unavailable, the first communication unit 71 of the terminal device triggers the random access procedure based on the RACH parameter(s) carried in the handover command.

Further, when the terminal device triggers the random access procedure based on the one or more RACH parameters carried in the handover command, the first processing unit 72 of the terminal device stops the first timer.

Processing Mode 2, if the third uplink resource dynamically scheduled by the first downlink channel is unavailable and the first timer has not expired, the first communication unit 71 of the terminal device keeps monitoring the first downlink channel.

The first communication unit 71 of the terminal device triggers a random access procedure based on the one or more RACH parameters in the handover command in response to expiry of the first timer.

In this example, for RACH-less handover, the RACH-less timer is introduced to effectively control the time for the RACH-less access. If the RACH-less access fails, the random access procedure can still be triggered to complete the access, thereby improving the handover success rate. For the PDCCH monitoring, by determining whether the uplink resource scheduled by the PDCCH is available or not, it is determined whether to update the TA value on the network side by triggering the random access procedure as soon as possible, which can enable the network to schedule the available uplink resource more quickly and improve the access success rate.

### Example 3

Unlike the above Examples 1 and 2, this example is not limited to the process of RACH-less handover. The terminal device's operation of triggering the RACH when the uplink transmission resource is unavailable can also be applied when the terminal device receives dynamic scheduling of the uplink transmission from the base station during normal data transmission.

The predetermined condition in this example is different from the above Examples 1 and 2. The predetermined condition in this example may be the dynamically scheduled uplink transmission resource being unavailable.

Specifically, the first communication unit 71 of the terminal device receives a fourth uplink resource dynamically scheduled by the first downlink channel.

Correspondingly, the first communication unit 71 of the terminal device triggers the random access procedure when the fourth uplink resource dynamically scheduled by the first downlink channel is unavailable.

Correspondingly, the second communication unit 81 of the network device may further indicate the dynamically scheduled uplink resource to the terminal device via the first downlink channel.

The description of the first downlink channel is the same as the previous example, and details thereof will be omitted here. The scheme for determining whether the uplink resource scheduled by the first downlink channel is available is the same as that in Example 2, and details thereof will be omitted here. It is to be noted that the fourth uplink resource and the third uplink resource in the above example may be the same or different, and the present disclosure is not limited to any of these examples.

In addition, the terminal device in this example triggering the random access procedure may include performing the random access procedure based on the RACH parameter(s).

The scheme for obtaining the RACH parameter(s) may include: the RACH parameter(s) being configured by the network device via downlink information, or being predetermined (for example, predetermined according to a protocol), and so on. If the RACH parameter(s) is (are) configured by the network device via the downlink information, it (they) may be configured via DCI, RRC signaling, MAC CE, etc., and the list here is not exhaustive.

Of course, there is no conflict between the solution of Example 3 and the solutions of the above Example 1 or Example 2. Example 3 and Example 1 or Example 2 can be used in combination, but can be used in different processing stages of the terminal device. For example, the terminal device can use the solution provided in Example 1 or Example 2 in the RACH-less handover stage, and the solution provided in Example 3 in a processes other than the RACH-less handover process.

It can be seen that, with the above solutions, when the predetermined condition is met, the random access procedure is directly triggered. The predetermined condition may include RACH-less handover failure or a dynamically scheduled uplink transmission resource being unavailable. In this way, when the network device cannot be accessed based on the configured uplink resource, the target network device can be directly accessed by means of random access, thereby improving the success rate of access.

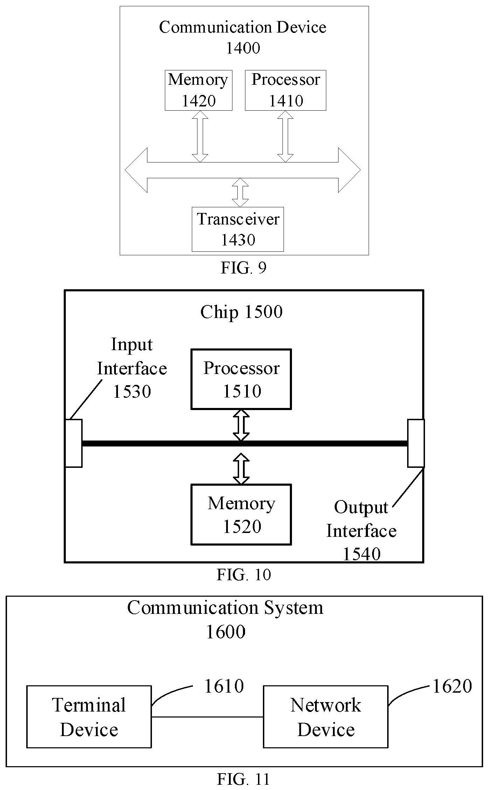

FIG. 9 is a schematic diagram showing a structure of a communication device 1400 according to an embodiment of the present disclosure. The communication device in this embodiment may be a terminal device or a network device in the above embodiments. The communication device 1400 shown in FIG. 9 includes a processor 1410, and the processor 1410 can invoke and execute a computer program from a memory to perform the method according to any one of the embodiments of the present disclosure.

Optionally, as shown in FIG. 9, the communication device 1400 may further include a memory 1420. The processor 1410 can invoke and execute a computer program from the memory 1420 to perform the method according to any one of the embodiments of the present disclosure.

The memory 1420 may be a separate device independent of the processor 1410, or may be integrated in the processor 1410.

Optionally, as shown in FIG. 9, the communication device 1400 may further include a transceiver 1430. The processor 1410 can control the transceiver 1430 to communicate with other devices, and in particular to transmit information or data to other devices or receive information or data transmitted by other devices.

Here, the transceiver 1430 may include a transmitter and a receiver. The transceiver 1430 may further include one or more antennas.

Optionally, the communication device 1400 can perform corresponding procedures implemented by the terminal device or the network device according to any one of the embodiments of the present disclosure. Details thereof will be omitted here for simplicity.

FIG. 10 is a schematic diagram showing a structure of a chip 1500 according to an embodiment of the present disclosure. The chip 1500 shown in FIG. 10 includes a processor 1510, and the processor 1510 can invoke and execute a computer program from a memory to implement the method in the embodiment of the present disclosure.

Optionally, as shown in FIG. 10, the chip 1500 may further include a memory 1520. The processor 1510 can invoke and execute a computer program from the memory 1520 to implement the method in the embodiment of the present disclosure.

The memory 1520 may be a separate device independent from the processor 1510, or may be integrated in the processor 1510.

Optionally, the chip 1500 may further include an input interface 1530. The processor 1510 can control the input interface 1530 to communicate with other devices or chips, and in particular to obtain information or data transmitted by other devices or chips.

Optionally, the chip 1500 may further include an output interface 1540. The processor 1510 can control the output interface 1540 to communicate with other devices or chips, and in particular to output information or data to other devices or chips.

Optionally, the chip can perform corresponding procedures implemented by the terminal device or the network device according to any one of the embodiments of the present disclosure. Details thereof will be omitted here for simplicity.

It can be appreciated that the chip in the embodiment of the present disclosure may be a chip, and the chip may also be referred to as a system-level chip, a system-chip, a chip system, or a system-on-chip.

It is to be noted that the processor in the embodiment of the present disclosure may be an integrated circuit chip with signal processing capability. In an implementation, the steps of the above method embodiments can be implemented by hardware integrated logic circuits in a processor or instructions in the form of software. The processor can be a general purpose processor, a Digital Signal Processor (DSP), an Application Specific Integrated Circuit (ASIC), a Field Programmable Gate Array (FPGA) or another programmable logic device, a discrete gate or transistor logic device, or a discrete hardware component.

It can be appreciated that the memory in the embodiments of the present disclosure may be a volatile memory or a non-volatile memory, or may include both volatile and non-volatile memories. It is to be noted that the memory used for the system and method described in the present disclosure is intended to include, but not limited to, these and any other suitable types of memories.

It can be appreciated that the above memories are exemplary only, rather than limiting the present disclosure. For example, the memory in the embodiment of the present disclosure may also be a Static RAM (SRAM), a Dynamic RAM (DRAM), a Synchronous DRAM (SDRAM), a Double Data Rate SDRAM (DDR SDRAM), an Enhanced SDRAM (ESDRAM), a Synch Link DRAM (SLDRAM), or a Direct Rambus RAM (DR RAM). That is, the memory in the embodiments of the present disclosure is intended to include, but not limited to, these and any other suitable types of memories.

FIG. 11 is a schematic block diagram of a communication system 1600 according to an embodiment of the present disclosure. As shown in FIG. 11, the communication system 1600 includes a terminal device 1610 and a network device 1620.

Here, the terminal device 1610 can be configured to implement the corresponding functions implemented by the terminal device in the above method, and the network device 1620 can be configured to implement the corresponding functions implemented by the network device in the above method. For the sake of brevity, details thereof will be omitted here.

An embodiment of the present disclosure also provides a computer readable storage medium for storing a computer program.

Optionally, the computer readable storage medium can be applied to the network device, the satellite, or the terminal device in the embodiments of the present disclosure, and the computer program can cause a computer to perform corresponding procedures implemented by the network device in the method according to any of the embodiments of the present disclosure. Details thereof will be omitted here for simplicity.

An embodiment of the present disclosure also provides a computer program product including computer program instructions.

Optionally, the computer program product can be applied to the network device, the satellite, or the terminal device in the embodiments of the present disclosure, and the computer program instructions can cause a computer to perform corresponding procedures implemented by the network device in the method according to any one of the embodiments of the present disclosure. Details thereof will be omitted here for simplicity.

An embodiment of the present disclosure also provides a computer program.

Optionally, the computer program can be applied to the network device, the satellite, or the terminal device in the embodiments of the present disclosure. The computer program, when executed on a computer, can cause the computer to perform corresponding procedures implemented by the network device in the method according to any one of the embodiments of the present disclosure. Details thereof will be omitted here for simplicity.

It can be appreciated by those skilled in the art that units and algorithm steps in the examples described in connection with the embodiments disclosed herein can be implemented in electronic hardware or any combination of computer software and electronic hardware. Whether these functions are executed by hardware or software depends on specific applications and design constraint conditions of the technical solutions. Those skilled in the art may use different methods for each specific application to implement the described functions, and such implementation is to be encompassed by the scope of this disclosure.

Those skilled in the art can clearly understand that, for the convenience and conciseness of the description, for the specific operation processes of the systems, devices, and units described above, reference can be made to the corresponding processes in the foregoing method embodiments, and details thereof will be omitted here.

In the embodiments of the present disclosure, it can be appreciated that the disclosed systems, devices, and methods may be implemented in other ways. The units described as separate components may or may not be physically separated, and the components shown as units may or may not be physical units, that is, they may be co-located or distributed across a number of network elements. Some or all of the units may be selected according to actual needs to achieve the objects of the solutions of the embodiments.

In addition, the functional units in the embodiments of the present disclosure may be integrated into one processing unit, or alternatively be separate physical modules, or two or more units may be integrated into one unit.

When the function is implemented in the form of a software functional unit and sold or used as a standalone product, it can be stored in a computer readable storage medium. Based on this understanding, all or part of the technical solutions according to the embodiments of the present disclosure, or the part thereof that contributes to the prior art, can be embodied in the form of a software product. The computer software product may be stored in a storage medium and contain instructions to enable a computer device, such as a personal computer, a server, or a network device, etc., to perform all or part of the steps of the method described in each of the embodiments of the present disclosure. The storage medium may include a Universal Serial Bus flash drive, a mobile hard disk, a Read-Only Memory (ROM), a Random Access Memory (RAM), a magnetic disk, an optical disc, or any other medium capable of storing program codes.

While the specific embodiments of the present disclosure have been described above, the scope of the present disclosure is not limited to these embodiments. Various variants and alternatives can be made by those skilled in the art without departing from the scope of the present disclosure. These variants and alternatives are to be encompassed by the scope of present disclosure as defined by the claims as attached.

## Claims

1. A transmission control method, comprising:
triggering, by a terminal device, a random access procedure when a predetermined condition is met,
wherein the predetermined condition comprises at least one of:
a Random Access Channel-less (RACH-less) handover failure, or
a dynamically scheduled uplink transmission resource being unavailable.

2. The method according to claim 1, further comprising:
receiving, by the terminal device, a handover command,
wherein the handover command comprises: RACH Skip information and/or one or more RACH parameters.

3. The method according to claim 2, wherein
the RACH Skip information indicates an uplink resource for accessing a target network device, and
the one or more RACH parameters comprise: a RACH resource and/or a dedicated preamble sequence.

4. The method according to claim 2 or 3, wherein the predetermined condition of the RACH-less handover failure comprises one of:
the uplink resource for accessing the target network device indicated by the RACH Skip information being unavailable, and
the RACH Skip information not being comprised in the handover command.

5. The method according to claim 4, further comprising:
transmitting, by the terminal device when there is an available first uplink resource in the uplink resource for accessing the target network device as comprised in the RACH Skip information, first indication information on the first uplink resource,
wherein the first indication information indicates handover completion.

6. The method according to claim 4, wherein said triggering, by the terminal device, the random access procedure when the predetermined condition is met comprises:
triggering, by the terminal device, the random access procedure based on the one or more RACH parameters in the handover command when the predetermined condition is met.

7. The method according to claim 4, wherein the handover command further comprises a first timer.

8. The method according to claim 7, further comprising:
starting, by the terminal device, the first timer in response to receiving the handover command.

9. The method according to claim 8, further comprising:
transmitting, by the terminal device when there is an available second uplink resource in the uplink resource for accessing the target network device as comprised in the RACH Skip information while the first timer is running, first indication information on the second uplink resource and stopping the first timer,
wherein the first indication information indicates handover completion.

10. The method according to claim 8, further comprising:
monitoring, by the terminal device when the predetermined condition is met and while the first timer is running, a first downlink channel that is used to dynamically schedule a third uplink resource.

11. The method according to claim 10, further comprising:
triggering, by the terminal device, a random access procedure based on the one or more RACH parameters carried in the handover command when the third uplink resource dynamically scheduled by the first downlink channel is unavailable.

12. The method according to claim 11, further comprising, when the terminal device triggers the random access procedure based on the one or more RACH parameters carried in the handover command: stopping the first timer.

13. The method according to claim 10, further comprising:
keeping, by the terminal device, monitoring the first downlink channel when the third uplink resource dynamically scheduled by the first downlink channel is unavailable and the first timer has not expired.

14. The method according to claim 10 or 13, further comprising:
transmitting, by the terminal device when the third uplink resource dynamically scheduled by the first downlink channel is available and while the first timer is running, RRCReconfigurationComplete information on the third uplink resource, and stopping the first timer.

15. The method according to claim 8, further comprising:
triggering, by the terminal device in response to expiry of the first timer, a random access procedure based on the one or more RACH parameters in the handover command.

16. The method according to claim 1, further comprising:
receiving, by the terminal device, a fourth uplink resource dynamically scheduled by the first downlink channel.

17. The method according to claim 16, wherein said triggering, by the terminal device, the random access procedure when the predetermined condition is met comprises:
triggering, by the terminal device, the random access procedure when the fourth uplink resource dynamically scheduled by the first downlink channel is unavailable.

18. A transmission control method, comprising:
performing, by a network device, a random access procedure with a terminal device when the terminal device meets a predetermined condition,
wherein the predetermined condition comprises at least one of:
a Random Access Channel-less (RACH-less) handover failure, or
a dynamically scheduled uplink transmission resource being unavailable.

19. The method according to claim 18, wherein the network device is a target network device, and the method further comprises:
transmitting, by the target network device, a handover command to the terminal device via a source network device,
wherein the handover command comprises RACH Skip information and/or one or more RACH parameters.

20. The method according to claim 19, wherein
the RACH Skip information indicates an uplink resource for accessing a target network device, and
the one or more RACH parameters comprise: a RACH resource and/or a dedicated preamble sequence.

21. The method according to claim 20, further comprising:
receiving, by the network device, first indication information transmitted by the terminal device,
wherein the first indication information indicates handover completion.

22. The method according to claim 19, wherein the handover command further comprises a first timer.

23. The method of any of claims 18-22, further comprising:
indicating, by the network device, a dynamically scheduled uplink resource to the terminal device on a first downlink channel.

24. A terminal device, comprising:
a first communication unit configured to trigger a random access procedure when a predetermined condition is met;
wherein the predetermined condition comprises at least one of:
a Random Access Channel-less (RACH-less) handover failure, or
a dynamically scheduled uplink transmission resource being unavailable.

25. The terminal device according to claim 24, wherein the first communication unit is configured to receive a handover command,
wherein the handover command comprises: RACH Skip information and/or one or more RACH parameters.

26. The terminal device according to claim 25, wherein
the RACH Skip information indicates an uplink resource for accessing a target network device, and
the one or more RACH parameters comprise: a RACH resource and/or a dedicated preamble sequence.

27. The terminal device according to claim 25 or 26, wherein the predetermined condition of the RACH-less handover failure comprises one of:
the uplink resource for accessing the target network device indicated by the RACH Skip information being unavailable, and
the RACH Skip information not being comprised in the handover command.

28. The terminal device according to claim 27, wherein the first communication unit is configured to transmit, when there is an available first uplink resource in the uplink resource for accessing the target network device as comprised in the RACH Skip information, first indication information on the first uplink resource,
wherein the first indication information indicates handover completion.

29. The terminal device according to claim 27, wherein the first communication unit is configured to trigger the random access procedure based on the one or more RACH parameters in the handover command when the predetermined condition is met.

30. The terminal device according to claim 27, wherein the handover command further comprises a first timer.

31. The terminal device according to claim 30, further comprising:
a first processing unit configured to start the first timer in response to receiving the handover command.

32. The terminal device according to claim 31, wherein the first communication unit is configured to transmit, when there is an available second uplink resource in the uplink resource for accessing the target network device as comprised in the RACH Skip information while the first timer is running, first indication information on the second uplink resource and stop the first timer,
wherein the first indication information indicates handover completion.

33. The terminal device according to claim 31, wherein the first communication unit is configured to monitor, when the predetermined condition is met and while the first timer is running, a first downlink channel that is used to dynamically schedule a third uplink resource.

34. The terminal device according to claim 33, wherein the first communication unit is configured to trigger a random access procedure based on the one or more RACH parameters carried in the handover command when the third uplink resource dynamically scheduled by the first downlink channel is unavailable.

35. The terminal device according to claim 34, wherein the first processing unit is configured to stop the first timer when the terminal device triggers the random access procedure based on the one or more RACH parameters carried in the handover command.

36. The terminal device according to claim 33, wherein the first communication unit is configured to keep monitoring the first downlink channel when the third uplink resource dynamically scheduled by the first downlink channel is unavailable and the first timer has not expired.

37. The terminal device according to claim 33 or 36, wherein the first communication unit is configured to transmit, when the third uplink resource dynamically scheduled by the first downlink channel is available and while the first timer is running, RRCReconfigurationComplete information on the third uplink resource, and
the first processing unit is configured to stop the first timer.

38. The terminal device according to claim 30, wherein the first communication unit is configured to trigger, in response to expiry of the first timer, a random access procedure based on the one or more RACH parameters in the handover command.

39. The terminal device according to claim 24, wherein the first communication unit is configured to receive a fourth uplink resource dynamically scheduled by the first downlink channel.

40. The terminal device according to claim 39, wherein the first communication unit is configured to trigger the random access procedure when the fourth uplink resource dynamically scheduled by the first downlink channel is unavailable.

41. A network device, comprising:
a second communication unit configured to perform a random access procedure with a terminal device when the terminal device meets a predetermined condition,
wherein the predetermined condition comprises at least one of:
a Random Access Channel-less (RACH-less) handover failure, or
a dynamically scheduled uplink transmission resource being unavailable.

42. The network device according to claim 41, wherein the second communication unit is configured to transmit a handover command to the terminal device via a source network device,
wherein the handover command comprises: RACH Skip information and/or one or more RACH parameters.

43. The network device according to claim 42, wherein
the RACH Skip information indicates an uplink resource for accessing a target network device, and
the one or more RACH parameters comprise: a RACH resource and/or a dedicated preamble sequence.

44. The network device according to claim 43, wherein the second communication unit is configured to receive first indication information transmitted by the terminal device,
wherein the first indication information indicates handover completion.

45. The network device according to claim 42, wherein the handover command further comprises a first timer.

46. The network device according to any one of claims 41-45, wherein the second communication unit is configured to indicate a dynamically scheduled uplink resource to the terminal device on a first downlink channel.

47. A terminal device, comprising a processor and a memory for storing a computer program executable on the processor, wherein the memory is configured to store a computer program, and the processor is configured to invoke and execute the computer program stored in the memory to perform steps in the method according to any one of claims 1 to 17.

48. A network device, comprising a processor and a memory for storing a computer program executable on the processor, wherein the memory is configured to store a computer program, and the processor is configured to invoke and execute the computer program stored in the memory to perform steps in the method according to any one of claims 18 to 23.

49. A chip, comprising a processor configured to invoke and execute a computer program from a memory, to enable a device provided with the chip to perform the method according to any one of claims 1 to 17.

50. A chip, comprising a processor configured to invoke and execute a computer program from a memory, to enable a device provided with the chip to perform the method according to any one of claims 18 to 23.

51. A computer-readable storage medium, configured to store a computer program that enables a computer to perform the method according to any one of claims 1 to 23.

52. A computer program product, comprising computer program instructions that cause a computer to perform the method according to any one of claims 1 to 23.

53. A computer program, causing a computer to perform the method according to any one of claims 1 to 23.
